# EUROPÄISCHE PATENTANMELDUNG

(11) **EP 4 354 801 A2**
(43) Veröffentlichungstag der Anmeldung: **17.04.2024**
(21) Anmeldenummer: 24161807.3
(22) Anmeldetag: 10.03.2022
(51) Int. Cl.: H04L 9/40

(54) **VERFAHREN ZUR AUSSTELLUNG EINES ZERTIFIKATS UND COMPUTERIMPLEMENTIERTE REGISTRIERUNGSSTELLE**

(62) Teilanmeldung aus: 22161420.9
(71) Anmelder: Siemens Aktiengesellschaft, 80333 München (DE)
(72) Erfinder: Palmin, Anna, 76187 Karlsruhe (DE)
(74) Vertreter: Siemens Patent Attorneys

(57) **Zusammenfassung**

Vorgeschlagen wird ein Verfahren zur Ausstellung eines Zertifikats mit einem bestimmten Zertifikatsprofil an eine Anlagenkomponente (2) einer technischen Anlage durch eine Zertifizierungsstelle (5) der technischen Anlage, bei dem vor dem Übermitteln eines von der Anlagenkomponente (2) gestellten Zertifikatsantrages an die Zertifizierungsstelle (5) automatisiert geprüft wird,
- ob das bestimmte Zertifikatsprofil von der Anlagenkomponente (2) verwendet werden kann, und
- ob der Anlagenkomponente (2) das bestimmte Zertifikatsprofil in der technischen Anlage zugewiesen werden darf,
wobei für den Fall, dass beide Prüfungen erfolgreich sind, der Zertifikatsantrag an die Zertifizierungsstelle (5) übermittelt wird, welche für den Fall einer erfolgreichen Prüfung des Zertifikatsantrags das beantragte Zertifikat mit dem bestimmten Zertifikatsprofil für die Anlagenkomponente (2) ausstellt.

## Beschreibung

Die Erfindung betrifft ein Verfahren zur Ausstellung eines Zertifikats. Außerdem betrifft die Erfindung einen computerimplementierten Registrierungsdienst und ein System.

Sichere Kommunikationsprotokolle wie z.B. HTTPS oder OPC UA finden zunehmend Einzug in technischen Anlagen (genauer gesagt sowohl in den diskreten als auch in den verfahrenstechnischen Anlagen). Die Verwendung dieser Protokolle setzt die Benutzung von sog. digitalen Zertifikaten nach dem Standard X.509 voraus.

Neben der sicheren Kommunikation ist für den optimalen Schutz einer (industriellen) technischen Anlage die Einhaltung einer sicheren Gerätekonfiguration im Einklang mit verschiedenen Security-Anforderungen wie z.B. "Security by Default" und "Least Functionality" erforderlich. Gemäß den aktuellen Security-Konzepten werden die Anlagenkomponenten vor der Inbetriebnahme im Einklang mit dem Security-Konzept der Anlage unter Verwendung der sog. Herstellergerätezertifikate (IDevID Cert. nach IEEE802.1AR) auf die Originalität geprüft, provisioniert und anschließend sicher (d.h. gemäß dem o.g. Security-Konzept und darauf basierenden Security-Policies) konfiguriert. Erst dann dürfen die Anlagenkomponenten die erforderlichen kundenspezifischen Zertifikate (LDevID Cert nach IEEE802.1AR) beantragen und anschließend mit ihren Kommunikationspartnern unter Verwendung dieser Zertifikate sicher kommunizieren.

Die Komponenten einer technischen Anlage kommunizieren in der Regel mit mehr als einem Kommunikationspartner und nutzen dabei mehr als ein sicheres Kommunikationsprotokoll. Beispielsweise kann ein industrielles Automatisierungssystem (AS) in der Regel sein webbasiertes User Interface per HTTPS für den Benutzerzugriff bereitstellen (wobei ein zugehöriges TLS Server Zertifikat zum Einsatz kommt) und gleichzeitig (in Rolle des OPC UA Server) per OPC UA mit den zugehörigen OPC UA-Clients kommunizieren. Deswegen sollten die Anlagenkomponenten in der Regel mehrere Zertifikate (LDevID Cert.) beantragen, wobei es aus Security-Sicht empfehlenswert ist, ein dedizierts Zertifikat pro Verwendungszweck zu beantragen bzw. zu nutzen.

Die Beantragung von den für die Kommunikation benötigten Zertifikaten erfolgt nach den aktuellen PKI-Konzepten über eine Registrierungsstelle (engl. Registration Authority (RA)), die die Rolle eines intelligenten Gateways spielt. Intelligente Anlagenkomponenten (wie z.B. Netzwerkkomponenten oder Industrial Controller sowie OS-/ES-Server und Industrial Edge-Komponenten), die ein Zertifikatsmanagementprotokoll wie z.B. das Certificate Management Protocol (CMP) nach RFC 4210 bzw. nach dem Lightweight CMP Profile unterstützen, generieren dazu einen entsprechenden Zertifikatsantrag und übermitteln diesen an die Registrierungsstelle.

Da in der Regel jedes zu einem bestimmten Zweck ausgestellte Zertifikat während seines Lebenszyklus nicht nur initial beantragt, sondern auch erneuert und/oder revoziert werden soll/kann, bietet beispielswese das o.g. CMP-Protokoll verschiedene sog. CMP-Messages, anhand deren die jeweilige Art des Zertifikatsantrags (bzw. der jeweilige zugrundeliegende Use Case) erkannt werden kann. Bekommt die Registrierungsstelle beispielsweise eine sog. IR-Message ("Initial Request") von einer Anlagenkomponente zugeschickt, so erkennt sie daran, dass es sich um eine initiale (erstmalige) Beantragung eines bestimmten Zertifikats handelt. An einer CR- bzw. RR-Message erkennt sie einen Antrag zur Erneuerung bzw. zur Revokation eines bestehenden Zertifikats.

Auch wenn alle Zertifikatstypen wie TLS Server, TLS Client, OPC UA Server oder OPC UA Client Zertifikate aus rein technischer Sicht von einer gleichen Zertifizierungsstelle (engl. Certification Authority (CA)) ausgestellt werden könnten, wird im Hinblick auf Security eine Trennung und somit die Verwendung einer dedizierten Zertifizierungsstelle pro Verwendungszweck bzw. pro Kommunikationsprotokoll (wie z.B. TLS, OPC UA) empfohlen. Der Grund besteht darin, dass, wenn ein Gerät mehrere verschiedene Zertifikate für verschiedene Zwecke bzw. mehrere vom Gerät verwendete Kommunikationsprotokolle nutzt, die von derselben Zertifizierungsstelle ausgestellt wurden und diese Zertifizierungsstelle kompromittiert wird, das Gerät über kein sicheres Kommunikationsprotokoll mehr kommunizieren kann, denn sein (einziges) von einer kompromittierten Zertifizierungsstelle ausgestelltes und beglaubigtes Zertifikat gilt somit als nicht mehr vertrauenswürdig.

Auch in dem Fall, wenn gemäß der o.g. Empfehlung verschiedene Zertifizierungsstellen zum Ausstellen von Zertifikaten zu verschiedenen Verwendungszwecken/ Kommunikationsprotokollen zum Einsatz kommen, erfolgt die Zertifikatsbeantragung in der Regel über eine (zentrale) Registrierungsstelle (RA). Dabei kann die Registrierungsstelle den Verwendungszweck des anvisierten Zertifikats beispielsweise anhand der Inhalte des Zertifikatsantrags oder anhand des http-/https-Pfades, über welchen sie den Zertifikatsantrag erhält, erkennen.

Falls eine entsprechende Konfiguration vorgenommen wurde, kann die Registrierungsstelle in der Regel die verschiedenen Zertifikatsanträge an die verschiedenen zuständigen Zertifizierungsstellen weiterleiten. Hierzu ist es zu erwähnen, dass bei der Nutzung des CMP-Protokolls es prinzipiell möglich ist, dass die Anlagenkomponenten die zu adressierende Zertifizierungsstelle im Feld "recipient" entsprechend angeben. Dies setzt jedoch voraus, dass sie verschiedene Zertifizierungsstellen und deren Zuordnung zu den verschiedenen Zertifikatsprofilen "kennen", was in der Praxis eher selten der Fall ist. Normalerweise ist den Anlagenkomponenten nur die Registrierungsstelle (oder im Falle von segmentierten Netzwerken die zuständige lokale Registrierungsstelle (LRA)) als Ansprechpartner für die Zertifikatsbeantragung bekannt.

Die Registrierungsstelle prüft die bei ihr eingehenden Zertifikatsanträge in der Regel wie folgt:
(I) Prüfung, ob es einen Inventory-Eintrag zum Antragsteller gibt, der bestimmte im Zertifikatsantrag enthaltenen Daten, die den Antragsteller identifizieren (insb. dessen ID), im Inventory der Registrierungsstelle (oder einem dedizierten Inventory) enthält, d.h. ob der Antragsteller ihr bekannt ist. Falls das Ergebnis der Prüfung nicht ok ist: Zertifikatsantrag wird abgelehnt. Falls das Ergebnis der Prüfung ok ist, gehe zu Schritt II.
(II) Prüfung, ob der Zertifikatsantrag, genauer gesagt dessen Signatur nach RFC5280, korrekt und valide ist (was grob bedeutet, dass die Signatur des Zertifikatsantrags zum Zertifikatsantrag "passt"). Falls das Ergebnis der Prüfung nicht ok ist: Zertifikatsantrag wird abgelehnt. Falls das Ergebnis der Prüfung ok ist, gehe zu Schritt (III).
(III) Prüfung, ob das zum Signieren des Zertifikatsantrags verwendete Zertifikat von einer (der Registrierungsstelle bekannten) Zertifizierungsstelle ausgestellt wurde, zu der die Registrierungsstelle bereits eine Vertrauensbeziehung hat (was beispielsweise bedeuten kann, dass die zugehörige "Certificate Chain" in der Konfiguration der Registrierungsstelle und/oder deren "Certificate Store" entsprechend abgelegt ist). Falls das Ergebnis der Prüfung nicht ok ist: Zertifikatsantrag wird abgelehnt. Falls das Ergebnis der Prüfung ok ist, wird der Zertifikatsantrag an die entsprechende Zertifizierungsstelle (die z.B. in der CMP-Message genannt oder in der Konfiguration angegeben ist) weitergeleitet.

In der EP 3 258 662 A1 ist ein Verfahren zur Registrierung eines intelligenten elektrischen Gerätes bei einer Zertifizierungsstelle offenbart.

Die US 5 745 574 A offenbart eine Sicherheitsinfrastruktur mit einer Vielzahl an Zertifizierungsstellen.

Die EP 3 287 925 A1 offenbart eine Computervorrichtung zum Übertragen eines Zertifikats auf ein Gerät in einer Anlage.

In der WO 2020/078750 A1 ist ein Verfahren zum sicheren Betreiben eines industriellen Automatisierungsgeräts in einem Automatisierungssystem offenbart. Im Rahmen dessen wird eine Registrierungsstelle zum Entgegennehmen und Weiterleiten von Zertifikatsanträgen beschrieben.

Es ist der Stand der Technik, dass jeder Zertifikatsantrag, der die Prüfungen (I) bis (III) erfolgreich durchlaufen hat, an die entsprechende (in der Registrierungsstelle konfigurierten) Zertifizierungsstelle weitergeleitet wird, was dazu führen kann, dass ggf. viele unnötige Zertifikate ausgestellt werden. Es ergeben sich hieraus insbesondere folgende Probleme :
- Erhöhtes Kommunikationsaufkommen (der ggf. zur Gefährdung des Normalbetriebs und der Verfügbarkeit der technischen Anlage führen kann), da die Anlagenkomponenten im Rahmen der initialen Beantragung unnötigen Zertifikatsanträge an die Registrierungsstelle übermitteln, welche diese dann an die zuständige Zertifizierungsstelle weiterleitet, die dann die überflüssigen Zertifikate über die Registrierungsstelle an die Antragsteller übermittelt, und da alle ausgestellten (u.a. auch die überflüssigen) Zertifikate kurz vor deren Ablauf erneuert werden, was wiederum zu einem unnötigen Verwaltungsaufwand/ Kommunikationsaufkommen führt;
- Erhöhter Speicherbedarf der Anlagenkomponenten, die alle überflüssigen Zertifikate in ihrem "Certificate Store" und die zugehörigen kryptographischen Schlüssel im zugehörigen "Key Store" (im Idealfall hardwaregebunden) ablegen, wobei dieses Problem insb. bei ressourcenarmen Geräten (engl. "Constraint Devices") als besonders gravierend gilt; und
- Erhöhter Speicherbedarf im Inventory bzw. im "Certificate Repository" der technischen Anlage, wo nach den aktuellen Vorgaben alle in der jeweiligen Umgebung ausgestellten Zertifikate aufbewahrt werden sollen.

Der Erfindung liegt die Aufgabe zugrunde, ein Verfahren zur Ausstellung eines Zertifikats für eine Anlagenkomponente einer technischen Anlage anzugeben, dass die zuvor ausgeführten Nachteile vermeidet und ein effizienteres Zertifikatsmanagement der technischen Anlage ermöglicht.

Diese Aufgabe wird gelöst durch ein Verfahren mit den Merkmalen des Anspruchs 1. Außerdem wird die Aufgabe gelöst durch eine computerimplementierte Registrierungsstelle gemäß Anspruch 12. Zudem wird die Aufgabe gelöst durch ein System gemäß Anspruch 14. Vorteilhafte Weiterbildungen ergeben sich aus den abhängigen Ansprüchen.

Bei einem erfindungsgemäßen Verfahren zur Ausstellung eines Zertifikats mit einem bestimmten Zertifikatsprofil an eine Anlagenkomponente einer technischen Anlage durch eine Zertifizierungsstelle der technischen Anlage wird vor dem Übermitteln eines von der Anlagenkomponente gestellten Zertifikatsantrages an die Zertifizierungsstelle automatisiert geprüft,
- ob das bestimmte Zertifikatsprofil von der Anlagenkomponente verwendet werden kann, und
- ob der Anlagenkomponente das bestimmte Zertifikatsprofil in der technischen Anlage zugewiesen werden darf,
wobei für den Fall, dass beide Prüfungen erfolgreich sind, der Zertifikatsantrag an die Zertifizierungsstelle übermittelt wird, welche für den Fall einer erfolgreichen Prüfung des Zertifikatsantrags das beantragte Zertifikat mit dem bestimmten Zertifikatsprofil für die Anlagenkomponente ausstellt.

Unter einem Zertifikat wird ein digitaler Datensatz verstanden, der bestimmte Eigenschaften (in diesem Fall von Maschinen, Geräten, Applikationen und dergleichen) bestätigt. Eine Authentizität und Integrität des Zertifikats können in der Regel mittels kryptografischer Verfahren verifiziert werden. Ein Zertifikat wird für den Einsatz einer Anlagenkomponente in der technischen Anlage von einer Zertifizierungsstelle ausgestellt, die auch als eine sogenannte "Issuing CA (Certification Authority)" bezeichnet wird. Eine derartige Issuing CA ist in der Regel stets online und stellt, basierend auf eingehenden Zertifikatsanträgen, Zertifikate für diverse Antragsteller aus, die sie mit ihrem eigenen Issuing CA Zertifikat signiert. Die Vertrauenswürdigkeit der Issuing CA wird dadurch sichergestellt, dass ihr eigenes Issuing CA Zertifikat durch das Zertifikat einer vertrauenswürdigen Wurzelzertifizierungsstelle (auch als "Root CA" bezeichnet), die sich in einer abgesicherten Umgebung befindet, signiert ist. Hierbei ist zu beachten, dass die Root CA die meiste Zeit offline ist und nur dann - unter der Einhaltung strengster Sicherheitsvorkehrungen - aktiviert bzw. eingeschaltet wird, wenn sie ein Zertifikat für eine zugehörige Issuing CA ausstellen soll. Die Root CA kann sich außerhalb der technischen Anlage befinden.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Bei der Anlagenkomponente der technischen Anlage kann es sich um ein beliebiges Gerät oder eine computerimplementierte Applikation handeln, die für eine Kommunikation mit weiteren Komponenten der technischen Anlage der Authentifizierung durch eines oder mehrere Zertifikate bedarf. Anlagenkomponenten der technischen Anlage können beispielsweise Vorrichtungen wie Pumpen, Ventile, Motoren, Heizkessel und dergleichen, aber auch Softwareprogramme sein.

Um ein Zertifikat zu erhalten, das die Anlagenkomponente zur Interaktion mit weiteren Anlagenkomponenten innerhalb der technischen Anlage benötigt, muss die Anlagenkomponente einen an die Zertifizierungsstelle gerichteten Zertifikatsantrag stellen (unmittelbar oder mittelbar über eine im weiteren Verlauf erläuterte Registrierungsstelle). Der Zertifikatsantrag ist daher mit anderen Worten ein Antrag der Anlagenkomponente an die Zertifizierungsstelle der technischen Anlage, der Anlagenkomponente ein Zertifikat auszustellen.

Das Zertifikat weist ein bestimmtes Zertifikatsprofil (engl. Certificate Profile) auf. Dabei umfasst das Zertifikatsprofil einen Typ des Zertifikats. Bei einem Typ kann es sich beispielsweise um ein TLS (Transport Layer Security) Server Zertifikat, ein TLS Client Zertifikat, ein OPC UA (Open Platform Communications Unified Architecture) Server Zertifikat oder um ein OPC UA Client Zertifikat handeln. Gemäß dem zugewiesenen Zertifikatstyp und ggf. weiteren zusätzlichen Anforderungen kann das Zertifikatsprofil bestimmte Zertifikatsattribute gemäß dem ITU-T-Standard X.509 und deren Werte umfassen. Dabei wird bei der Validierung anhand dieses Zertifikatsprofils jeder Zertifikatsantrag abgelehnt, der nicht alle festgelegten Attribute und Werte beinhaltet. Je mehr Attribute und/oder Werte durch das Zertifikatsprofil vorgeschrieben / festgelegt sind, desto strikter und genauer ist die Validierung.

Im Rahmen der Erfindung wird automatisiert geprüft, ob das bestimmte Zertifikatsprofil von der Anlagenkomponente verwendet werden kann. Damit ist gemeint, dass geprüft wird, ob die Anlagenkomponente, die den Zertifikatsantrag an die Zertifizierungsstelle stellen will, technisch dazu in der Lage ist, das von ihr beantragte Zertifikat mit dem bestimmten Zertifikatsprofil zu benutzen. Dies wäre beispielsweise nicht der Fall, wenn eine Anlagenkomponente, die eigentlich nicht OPC UA-fähig ist, ein OPC UA Server-Zertifikat beantragt oder wenn eine Analgenkomponente, die nicht als TLS-Server agieren kann, ein TLS Server-Zertifikat beantragt.

Im Rahmen einer zweiten Prüfungsstufe wird geprüft, ob der Anlagenkomponente, die den Zertifikatsantrag stellen will, das bestimmte Zertifikatsprofil in der technischen Anlage zugewiesen werden darf. Mit anderen Worten wird nach der der Prüfung der grundsätzlichen Fähigkeit, das Zertifikat mit dem bestimmten Zertifikatsprofil zu verwenden, auch hinsichtlich dem tatsächlichen Bedarf innerhalb der technischen Anlage geprüft, das Zertifikat mit dem bestimmten Zertifikatsprofil in der technischen Anlage zu verwenden. Die zweite Stufe der Prüfung wäre beispielsweise dann ohne Erfolg, wenn die Anlagenkomponente zwar als Webserver agieren kann (weshalb die erste Stufe der Prüfung noch Erfolg hätte), diese Funktionalität jedoch im Kontext der jeweiligen Laufzeitumgebung der technischen Umgebung nicht gewünscht ist. Durch die erfolglose zweite Stufe der Prüfung wäre die gesamte Prüfung ohne Erfolg, weshalb der Zertifikatsantrag in diesem Fall nicht an die Zertifizierungsstelle übermittelt werden würde.

Das erfindungsgemäße Verfahren kann erfolgreich die Ausstellung von überflüssigen Zertifikaten in der technischen Anlage verhindern, wodurch ein fundierter Beitrag zur Optimierung der Kommunikation und der Aufrechterhaltung des Normalbetriebs und der Verfügbarkeit der technischen Anlage geleistet werden kann.

Die Prüfung, ob das bestimmte Zertifikatsprofil von der Anlagenkomponente verwendet werden kann, kann von der Anlagenkomponente automatisiert vorgenommen werden, derart, dass die Anlagenkomponente nur für den Fall, dass die Prüfung erfolgreich ist, einen Zertifikatsantrag stellt. Für den Fall, dass ein Zertifikat mit einem bestimmten Zertifikatsprofil von der Anlagenkomponente nicht unterstützt wird, wird daher erst gar kein Zertifikatsantrag gestellt (und in der Konsequenz auch nicht an die Zertifizierungsstelle übermittelt). Für den Fall, dass die Anlagenkomponente eine Mehrzahl von Zertifikatsprofilen unterstützt, können diese in einem Geräteprofil zusammengefasst werden, um die Übersichtlichkeit zu erhöhen und das Management von Zertifikatsprofilen auf der Herstellerseite und auch in der operativen Einsatzumgebung zu vereinfachen und zuverlässiger zu gestalten.

Hierzu sind auf der Anlagenkomponente bevorzugt Informationen darüber hinterlegt, welche Zertifikatsprofile die Anlagenkomponente verwenden kann. Diese Informationen können von einem Hersteller der Anlagenkomponente, einem Originalgerätehersteller (OEM) der Anlagenkomponente oder einem Operator/Betreiber der Anlagenkomponente in der technischen Anlage auf der Anlagenkomponente hinterlegt worden sein.

Bevorzugt werden die Informationen regelmäßig oder ereignisgesteuert, insbesondere für den Fall einer Funktionserweiterung der Anlagenkomponente, aktualisiert, wobei die Aktualisierung durch einen Operator/Benutzer getriggert oder automatisiert erfolgen kann. Ein solches Ereignis kann auch beispielsweise die Ersetzung des im betroffenen Zertifikatsprofil enthaltenen, zur Verschlüsselung und/oder zur Signaturbildung verwendeten RSA-Algorithmus durch einen ECC-Algorithmus oder eines speziellen, länderspezifischen Algorithmus sein.

Zusätzlich oder alternativ zur (ersten) Stufe der Prüfung durch die Anlagenkomponente selbst können die Prüfungen, ob das bestimmte Zertifikatsprofil von der Anlagenkomponente verwendet werden kann, und ob der Anlagenkomponente das bestimmte Zertifikatsprofil in der technischen Anlage zugewiesen werden darf, von einer Registrierungsstelle der technischen Anlage vorgenommen werden, wobei die Registrierungsstelle die Prüfungen in Reaktion auf den von der Anlagenkomponente an die Registrierungsstelle gerichteten Zertifikatsantrag vornimmt, und wobei die Registrierungsstelle nur für den Fall, dass beide Prüfungen erfolgreich sind, den Zertifikatsantrag an die Zertifizierungsstelle übermittelt.

Die für die (erste) Prüfung, ob das bestimmte Zertifikatsprofil von der Anlagenkomponente verwendet werden kann, benötigten Informationen können dabei von einem Betreiber/Operator der technischen Anlage in der Registrierungsstelle hinterlegt worden sein. Auf Grundlage dieser Informationen kann die Registrierungsstelle den Zertifikatsantrag der Anlagenkomponente im Rahmen der ersten Stufe der zweistufigen Prüfung prüfen. Diese Prüfung ist insbesondere dann sinnvoll, wenn die Anlagenkomponente selbst nicht prüfen kann, ob das Zertifikatsprofil eines zu generierenden Zertifikatsantrags von der Anlagenkomponente verwendet werden kann. Stellt die Registrierungsstelle im Rahmen der ersten Stufe der Prüfung beispielsweise fest, dass ein Zertifikatsprofil (z.B. OPC UA) beantragt wurde, welches von der Anlagenkomponente (aufgrund deren Funktionsumfangs bzw. der von ihr unterstützten Kommunikationsprotokolle) nicht unterstützt wird, lehnt die Registrierungsstelle den Zertifikatsantrag ab und leitet ihn somit nicht an die Zertifizierungsstelle weiter.

Vorausgesetzt, dass die Anlagenkomponente zur Durchführung der ersten Stufe der Prüfung ausgebildet ist, kann die Anlagenkomponente der Registrierungsstelle mitteilen, dass die Prüfung, ob das bestimmte Zertifikatsprofil von der Anlagenkomponente verwendet werden kann, erfolgreich von der Anlagenkomponente selbst durchgeführt worden ist. In Reaktion hierauf kann die Registrierungsstelle auf eine erneute Prüfung, ob das bestimmte Zertifikatsprofil von der Anlagenkomponente verwendet werden kann, verzichten, um Ressourcen zu sparen.

Die zweite Stufe der Prüfung, also die Prüfung, ob der Anlagenkomponente das bestimmte Zertifikatsprofil in der technischen Anlage zugewiesen werden darf, kann auf der Grundlage von Vorgaben eines Operators erfolgen. Hierfür kann sich der Operator beispielsweise einer Nutzeroberfläche der Registrierungsstelle mit geeigneten Eingabemasken bedienen. Der Operator kann sogenannte Antragstellerprofile als Vorlagen verwenden, die er selbst oder ein Dritter zuvor definiert hat. In solch einem Antragstelleprofil werden die Zertifikatsprofile zusammengefast, die eine Anlagenkomponente in der technischen Anlage zugewiesen werden dürfen. Die Verwendung der Antragstellerprofile erleichtert die Konfiguration der zweiten Prüfung.

Die Prüfung, ob der Anlagenkomponente das bestimmte Zertifikatsprofil in der technischen Anlage zugewiesen werden darf, kann alternativ oder zusätzlich auf der Grundlage einer Automatisierung der technischen Anlage erfolgen. In der Automatisierung sind typischerweise Kommunikationsbeziehungen zwischen den einzelnen Anlagenkomponenten der technischen Anlage beschrieben, die einen direkten Einfluss darauf haben, welche Zertifikatstypen die Anlagenkomponenten jeweils benötigen. Beispielsweise die Registrierungsstelle kann diese Automatisierung, genau genommen eine entsprechende Datei, auslesen und für die zweite Prüfungsstufe automatische verwenden. Hierzu bedarf es keines Eingriffs durch einen Operator, wobei ein solcher jedoch nicht ausgeschlossen ist.

Änderungen an der Automatisierung der technischen Anlage können dabei von einem System erfasst werden, welches auf einem maschinellen Lernen basiert, wobei das System die Grundlagen für die Prüfung, ob der Anlagenkomponente das bestimmte Zertifikatsprofil in der technischen Anlage zugewiesen werden darf, in einem Bedarfsfall automatisch anpasst.

Bevorzugt wird das Ergebnis der der Prüfungen, ob das bestimmte Zertifikatsprofil von der Anlagenkomponente verwendet werden kann, und ob der Anlagenkomponente das bestimmte Zertifikatsprofil in der technischen Anlage zugewiesen werden darf, einem Operator der technischen Anlage visuell dargeboten. Dieser kann daraufhin etwaige Folgeaktionen auslösen, um auf das Ergebnis adäquat zu reagieren.

Das Ergebnis der Prüfungen, ob das bestimmte Zertifikatsprofil von der Anlagenkomponente verwendet werden kann, und - ob der Anlagenkomponente das bestimmte Zertifikatsprofil in der technischen Anlage zugewiesen werden darf, kann alternativ oder zusätzlich zu der visuellen Ausgabe in einem Archiv der technischen Anlage hinterlegt werden, beispielweise auf einem hierfür ausgebildeten Archivserver.

Unter einem Leitsystem wird im vorliegenden Kontext ein computergestütztes, technisches System verstanden, das Funktionalitäten zum Darstellen, Bedienen und Leiten der verfahrenstechnischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber kann das Leitsystem u.a. Mittel zur Visualisierung der verfahrenstechnischen Anlage und zu einem Engineering aufweisen. Unter dem Begriff Leitsystem sind zusätzlich auch weitere Recheneinheiten für komplexere Regelungen und Systeme zur Datenspeicherung und -verarbeitung zu fassen.

Die zuvor formulierte Aufgabe wird außerdem gelöst durch eine computerimplementierte Registrierungsstelle oder eine vergleichbare Instanz bzw. einen entsprechend vergleichbaren Service für ein Leitsystem einer technischen Anlage, die dazu ausgebildet ist, von einer Anlagenkomponente der technischen Anlage einen von der Anlagenkomponente gestellten Zertifikatsantrag zu empfangen, und die dazu ausgebildet ist, vor dem Übermitteln des Zertifikatsantrages an eine Zertifizierungsstelle der technischen Anlage automatisiert zu prüfen, ob das bestimmte Zertifikatsprofil von der Anlagenkomponente verwendet werden kann, und ob der Anlagenkomponente das bestimmte Zertifikatsprofil in der technischen Anlage zugewiesen werden darf, wobei die Registrierungsstelle dazu ausgebildet ist, für den Fall, dass beide Prüfungen erfolgreich sind, den Zertifikatsantrag an die Zertifizierungsstelle zu übermitteln.

Die Registrierungsstelle kann beispielsweise auf einem Operator Station Server eines Leitsystems implementiert sein. Unter einem "Operator Station Server" wird dabei ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Operator Station Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen. Bei dem Operator Station Server kann es sich, ohne sich darauf zu beschränken, um einen SIMATIC PCS 7 Industrial Workstation Server der Firma SIEMENS handeln.

Die computerimplementierte Registrierungsstelle kann dabei dazu ausgebildet sein, die Prüfung, ob der Anlagenkomponente das bestimmte Zertifikatsprofil in der technischen Anlage zugewiesen werden darf, auf der Grundlage von Vorgaben eines Operators und/oder auf der Grundlage einer Automatisierung der technischen Anlage vorzunehmen.

Die zuvor formulierte Aufgabe wird zudem gelöst durch ein System, das eine computerimplementierte Registrierungsstelle die wie zuvor erläutert ausgebildet ist, eine Zertifizierungsstelle und wenigstens eine Anlagenkomponente umfasst, wobei das System dazu ausgebildet ist, ein Verfahren durchzuführen, welches die zuvor erläuterten Verfahrensschritte umfasst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Es zeigen:
- FIG 1: ein erfindungsgemäßes System in einer schematischen Darstellung; und
- FIG 2: ein erfindungsgemäßes Verfahren in einem Ablaufdiagramm.

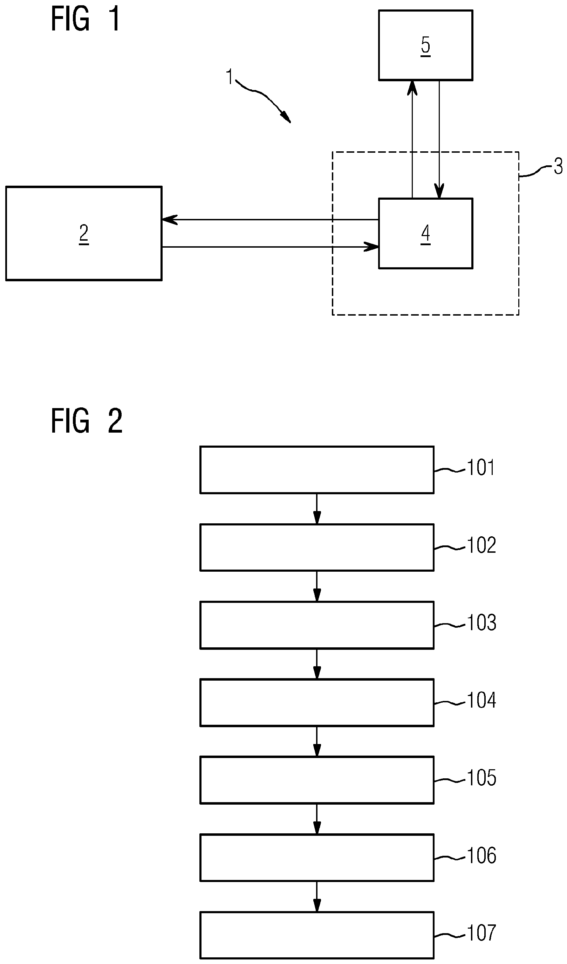

In FIG 1 ist ein System 1 dargestellt, welches eine Anlagenkomponente 2, einen Operator Station Server 3 mit einer hierauf implementierten Registrierungsstelle 4 und eine Zertifizierungsstelle 5 umfasst. Die Anlagenkomponente 2 ist mit dem Operator Station Server 3 und der hierauf implementierten Registrierungsstelle 4 verbunden. Analog dazu verfügt die Zertifizierungsstelle 5 über eine Verbindung zu dem Operator Station Server 3 mit der hierauf implementierten Registrierungsstelle 4.

Die Registrierungsstelle 4 ist in an sich bekannter Weise dazu ausgebildet, Zertifikatsanträge von der Anlagenkomponente 2 entgegenzunehmen und an die Zertifizierungsstelle 5 weiterzuleiten. Darüber hinaus ist die Registrierungsstelle 4 dazu ausgebildet, von der Zertifizierungsstelle 5 ausgestellte Zertifikate entgegenzunehmen und an die Anlagenkomponente 2 weiterzuleiten. Die Zertifizierungsstelle 5 ist dazu ausgebildet, Zertifikatsanträge zu prüfen und für den Fall, dass bestimmte Prüfkriterien erfüllt sind, das beantragte Zertifikat auszustellen. Darüber hinaus kann die Zertifizierungsstelle 5 auch bereits ausgestellte Zertifikate wieder revozieren, worauf jedoch im vorliegenden Kontext nicht weiter eingegangen wird.

In FIG 2 ist der Ablauf eines erfindungsgemäßen Verfahrens dargestellt. In einem ersten Schritt 101 prüft die Anlagenkomponente 2, ob ein Zertifikatsantrag für ein Zertifikat mit einem bestimmten Zertifikatsprofil, dessen Generierung von einem Operator oder automatisiert von einer Softwarekomponente einer technischen Anlage angestoßen wurde, gestellt werden darf. Dabei prüft die Anlagenkomponente 2 selbst, durch einen dazugehörigen Mikroprozessor, ob das bestimmte Zertifikatsprofil, welches Gegenstand des Zertifikatsantrags ist, von der Anlagenkomponente 2 verwendet werden kann. Ist dies nicht der Fall, wird die Generierung des Zertifikatsantrags abgelehnt.

Für den Fall, dass das Ergebnis der Prüfung erfolgreich ist, wird der Zertifikatsantrag an die Registrierungsstelle 4 weitergeleitet. Die Datenübertragung kann über einen Feldbus, beispielsweise Industrial Ethernet, erfolgen.

In einem zweiten Schritt 102 nimmt die Registrierungsstelle 4 den Zertifikatsantrag entgegen und prüft, ob der Antragssteller ihr bekannt ist. Diese Prüfung erfolgt, in an sich bekannter Weise durch einen Abgleich der Daten des Zertifikatsantrags (insbesondere die Daten, die eine Identität des Antragsstellers betreffen) mit einem der Registrierungsstelle 4 zugeordneten Speicher (engl. Inventory). Für den Fall, dass der Antragssteller der Registrierungsstelle 4 nicht bekannt ist, wird der Zertifikatsantrag abgelehnt. Für den Fall, dass der Antragssteller ihr bekannt ist, wird ein nachfolgender dritter Schritt 103 durchgeführt.

Im Rahmen des dritten Schrittes 103 prüft die Registrierungsstelle 4, ob der Zertifikatsantrag, genauer gesagt dessen Signatur, nach RFC5280 korrekt und valide ist. Mit anderen Worten prüft die Registrierungsstelle 4, ob die Signatur des Zertifikatsantrags zum Zertifikatsantrag passt. Für den Fall, dass diese Prüfung nicht erfolgreich ist, wird der Zertifikatsantrag abgelehnt. Für den Fall einer erfolgreichen Prüfung wird ein nachfolgender vierter Schritt 104 durchgeführt.

Die Registrierungsstelle 4 prüft im Rahmen des vierten Schrittes 104, ob das zum Signieren des Zertifikatsantrags verwendete Zertifikat von einer (der Registrierungsstelle 4 bekannten) Zertifizierungsstelle ausgestellt wurde, zu der die Registrierungsstelle 4 bereits eine Vertrauensbeziehung aufweist. Dabei kann es sich um die in FIG 1 dargestellte Zertifizierungsstelle 5 handeln. Das Vorliegen der Vertrauensbeziehung kann beispielsweise bedeuten, dass die zugehörige Zertifikatskette in einem Konfigurationsspeicher der Registrierungsstelle 4 und/oder in ihrem "Certificate Store" entsprechend abgelegt ist. Für den Fall, dass diese Prüfung nicht erfolgreich ist, wird der Zertifikatsantrag abgelehnt. Für den Fall einer erfolgreichen Prüfung wird ein nachfolgender fünfter Schritt 105 durchgeführt.

Im Rahmen des fünften Schrittes 105 prüft die Registrierungsstelle 4, ob das in dem Zertifikatsantrag beantragte bestimmte Zertifikatsprofil von der Anlagenkomponente 2 (überhaupt) verwendet werden kann. Welches Zertifikatsprofil beantragt wird, kann die Registrierungsstelle 4 dem Zertifikatsantrag entweder unmittelbar oder mittelbar über eine in dem Zertifikatsantrag referenzierte Quelle (beispielsweise eine URL) entnehmen. Der fünfte Schritt 105 ist in diesem Fall optional, da die Anlagenkomponente 2 diese Prüfung bereits selbst vorgenommen hat. Falls es sich jedoch um eine heterogene Umgebung / technische Anlage handelt, in der nicht jede Anlagenkomponente diese Prüfung nachweisbar vornehmen kann, ist es empfehlenswert, diese Prüfung durch die Registrierungsstelle 4 für alle eingehenden Zertifikatsanträge durchführen zu lassen. Für den Fall, dass diese Prüfung nicht erfolgreich ist, wird der Zertifikatsantrag abgelehnt. Für den Fall einer erfolgreichen Prüfung wird ein nachfolgender sechster Schritt 106 durchgeführt.

Im Rahmen des sechsten Schrittes 106 prüft die Registrierungsstelle 4, ob der Anlagenkomponente 2 das bestimmte Zertifikatsprofil in der technischen Anlage zugewiesen werden darf. Dabei kann sie die Prüfung auf Grundlage von Vorgaben eines Operators oder auf Grundlage einer Automatisierung der technischen Anlage, die insbesondere durch ein selbstlernendes System aktuell gehalten werden kann, vornehmen. Für den Fall, dass diese Prüfung nicht erfolgreich ist, wird der Zertifikatsantrag abgelehnt. Für den Fall einer erfolgreichen Prüfung wird ein nachfolgender siebter Schritt 107 durchgeführt.

Im Rahmen des siebten Schrittes 107 wird der Zertifikatsantrag an die Zertifizierungsstelle 5 weitergeleitet. Diese prüft, ob der Zertifikatsantrag gültig ist und stellt im Erfolgsfall das beantragte Zertifikat aus. Dieses wird von der Zertifizierungsstelle 5 über die Registrierungsstelle 4 an die Anlagenkomponente 2 übertragen und dort in einem Zertifikatsspeicher hinterlegt. Die Anlagenkomponente 2 kann daraufhin beispielsweise mit weiteren Anlagenkomponenten einer technischen Anlage, in welcher sich das System 1 befinden kann, kommunizieren.

Durch die beschriebene Erfindung sichergestellt werden, dass in einer OT-Umgebung/ einer industriellen Anlage nur die Zertifikate bei der entsprechenden Zertifizierungsstelle beantragt und von dieser ausgestellt werden, die die folgenden Voraussetzungen erfüllen:
- Das Zertifikatsprofil wird vom Antragsteller durch dessen Funktionsumfang unterstützt.
- Der Antragsteller benötigt dieses Zertifikat (bzw. dessen Zertifikatsprofil) im Kontext der jeweiligen industriellen Anlage/ OT-Umgebung.

Die Ausstellung überflüssiger Zertifikate kann durch die Erfindung im Wesentlichen vollständig unterbunden werden, wodurch ein fundierter Beitrag zu den folgenden signifikanten Verbesserungen geleistet wird:
- zur Optimierung/Minimierung des zur Speicherung der Zertifikate im Certificate Store der Anlagenkomponenten benötigten Speicherplatzes;
- zur Optimierung/Minimierung des zur Speicherung der Zertifikate im Inventory / Repository der OT-Umgebung / der industriellen Anlage benötigten Speicherplatzes;
- zur Optimierung/Minimierung des Verwaltungsaufwandes zur Verwaltung der in der OT/Umgebung bzw. in der industriellen Anlage ausgestellten Zertifikate (denn auch überflüssige Zertifikate werden aktuell erfahrungsgemäß von den Anlagenkomponenten bzw. von anderen Instanzen auf deren Ablauf überwacht und kurz vor deren Ablauf mit der Unterstützung von RA/CA entsprechend erneuert);
- zur Optimierung des Kommunikationsaufkommens (denn unnötige/überflüssige Zertifikatsanträge werden nicht an die Registrierungsstelle bzw. an die Zertifizierungsstelle weitergeleitet und die anschließende Ausstellung der auf diesen Zertifikatsanträgen basierenden (überflüssigen/unnötigen) Zertifikate sowie die Übermittlung dieser Zertifikate an die Antragsteller finden gar nicht statt;
- zur Aufrechterhaltung des Normalbetriebs und der Verfügbarkeit der OT-Umgebung/Anlage (aufgrund aller o.g. Vorteile)
- zur Krypto-Agilität, denn die in der vorliegenden Erfindung eingeführten zertifikatsspezifischen Geräte- und Antragsteller-Profile eine sehr hohe Flexibilität und Konfigurierbarkeit aufweisen, die insb. in dem Fall, wenn ein verwendeter kryprographischer Algorithmus gebrochen wurde oder (z.B. in einem bestimmten Land) nicht zum Einsatz kommen darf, ei-
nen schnellen Ersatz dieses Algorithmus durch einen anderen adäquaten Algorithmus ermöglicht.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Ausstellung eines Zertifikats mit einem bestimmten Zertifikatsprofil an eine Anlagenkomponente (2) einer technischen Anlage durch eine Zertifizierungsstelle (5) der technischen Anlage, bei dem vor dem Übermitteln eines von der Anlagenkomponente (2) gestellten Zertifikatsantrages an die Zertifizierungsstelle (5) automatisiert geprüft wird,
- ob das bestimmte Zertifikatsprofil von der Anlagenkomponente (2) verwendet werden kann, und
- ob der Anlagenkomponente (2) das bestimmte Zertifikatsprofil in der technischen Anlage zugewiesen werden darf,
wobei für den Fall, dass beide Prüfungen erfolgreich sind, der Zertifikatsantrag an die Zertifizierungsstelle (5) übermittelt wird, welche für den Fall einer erfolgreichen Prüfung des Zertifikatsantrags das beantragte Zertifikat mit dem bestimmten Zertifikatsprofil für die Anlagenkomponente (2) ausstellt,
wobei die Prüfung, ob der Anlagenkomponente (2) das bestimmte Zertifikatsprofil in der technischen Anlage zugewiesen werden darf, auf der Grundlage von Vorgaben eines Operators und/oder auf der Grundlage einer Automatisierung der technischen Anlage erfolgt.

2. Verfahren nach Anspruch 1, bei dem die Prüfung, ob das bestimmte Zertifikatsprofil von der Anlagenkomponente (2) verwendet werden kann, von der Anlagenkomponente (2) automatisiert vorgenommen wird, derart, dass die Anlagenkomponente (2) nur für den Fall, dass die Prüfung erfolgreich ist, einen Zertifikatsantrag stellt.

3. Verfahren nach Anspruch 2, bei dem die Anlagenkomponente (2) die Prüfung, ob das bestimmte Zertifikatsprofil von der Anlagenkomponente (2) verwendet werden kann, automatisiert auf der Grundlage von Informationen durchführt, die zuvor von einem Hersteller der Anlagenkomponente (2), einem Originalgerätehersteller der Anlagenkomponente (2) oder von einem Operator der technischen Anlage auf der Anlagenkomponente (2) hinterlegt worden sind.

4. Verfahren nach Anspruch 3, bei dem die Informationen regelmäßig oder ereignisgesteuert, insbesondere für den Fall einer Funktionserweiterung der Anlagenkomponente (2), aktualisiert werden, wobei die Aktualisierung durch einen Operator der technischen Anlage getriggert oder automatisiert erfolgen kann.

5. Verfahren nach einem der vorangegangenen Ansprüche, bei dem die Prüfungen, ob das bestimmte Zertifikatsprofil von der Anlagenkomponente (2) verwendet werden kann, und ob der Anlagenkomponente das bestimmte Zertifikatsprofil in der technischen Anlage zugewiesen werden darf, von einer Registrierungsstelle (4) der technischen Anlage vorgenommen werden, wobei die Registrierungsstelle (4) die Prüfungen in Reaktion auf den von der Anlagenkomponente (2) an die Registrierungsstelle gerichteten Zertifikatsantrag vornimmt, und wobei die Registrierungsstelle (4) nur für den Fall, dass beide Prüfungen erfolgreich sind, den Zertifikatsantrag an die Zertifizierungsstelle (5) übermittelt.

6. Verfahren nach wenigstens den Ansprüchen 2 und 5, bei dem die Anlagenkomponente (2) der Registrierungsstelle (4) mitteilt, dass die Prüfung, ob das bestimmte Zertifikatsprofil von der Anlagenkomponente (2) verwendet werden kann, erfolgreich von der Anlagenkomponente (2) selbst durchgeführt worden ist.

7. Verfahren nach Anspruch 1, bei dem Änderungen an der Automatisierung der technischen Anlage von einem System erfasst werden, welches auf einem maschinellen Lernen basiert, wobei das System die Grundlagen für die Prüfung, ob der Anlagenkomponente (2) das bestimmte Zertifikatsprofil in der technischen Anlage zugewiesen werden darf, in einem Bedarfsfall automatisch anpasst.

8. Verfahren nach einem der Ansprüche 1 bis 7, bei dem das Ergebnis der Prüfungen, ob das bestimmte Zertifikatsprofil von der Anlagenkomponente (2) verwendet werden kann, und - ob der Anlagenkomponente (2) das bestimmte Zertifikatsprofil in der technischen Anlage zugewiesen werden darf, einem Operator der technischen Anlage visuell dargeboten wird.

9. Verfahren nach einem der Ansprüche 1 bis 8, bei dem das Ergebnis der Prüfungen, ob das bestimmte Zertifikatsprofil von der Anlagenkomponente (2) verwendet werden kann, und - ob der Anlagenkomponente (2) das bestimmte Zertifikatsprofil in der technischen Anlage zugewiesen werden darf, in einem Archiv der technischen Anlage hinterlegt wird.

10. Computerimplementierte Registrierungsstelle (4) für ein Leitsystem einer technischen Anlage, die dazu ausgebildet ist, von einer Anlagenkomponente (2) der technischen Anlage einen von der Anlagenkomponente (2) gestellten Zertifikatsantrag zu empfangen, und die dazu ausgebildet ist, vor dem Übermitteln des Zertifikatsantrages an eine Zertifizierungsstelle (5) der technischen Anlage automatisiert zu prüfen, ob das bestimmte Zertifikatsprofil von der Anlagenkomponente (2) verwendet werden kann, und ob der Anlagenkomponente (2) das bestimmte Zertifikatsprofil in der technischen Anlage zugewiesen werden darf,
wobei die Registrierungsstelle (4) dazu ausgebildet ist, die Prüfung, ob der Anlagenkomponente (2) das bestimmte Zertifikatsprofil in der technischen Anlage zugewiesen werden darf, auf der Grundlage von Vorgaben eines Operators und/oder auf der Grundlage einer Automatisierung der technischen Anlage vorzunehmen,
und wobei die Registrierungsstelle (4) dazu ausgebildet ist, für den Fall, dass beide Prüfungen erfolgreich sind, den Zertifikatsantrag an die Zertifizierungsstelle (5) zu übermitteln.

11. System, umfassend eine computerimplementierte Registrierungsstelle (4) gemäß Anspruch 10, eine Zertifizierungsstelle (5) und wenigstens eine Anlagenkomponente (2), wobei das System dazu ausgebildet ist, ein Verfahren gemäß einem der Ansprüche 1 bis 9 durchzuführen.
